# EUROPÄISCHE PATENTANMELDUNG

(11) **EP 1 002 682 A2**
(43) Veröffentlichungstag der Anmeldung: **24.05.2000**
(21) Anmeldenummer: 99122464.3
(22) Anmeldetag: 11.11.1999
(51) Int. Cl.: B60K 15/03

(54) **Kraftstoffbehälter**

(30) Priorität: 18.11.1998 DE 19853097
(71) Anmelder: Mannesmann VDO Aktiengesellschaft, 60388 Frankfurt am Main (DE)
(72) Erfinder: Distelhoff, Markus, 60594 Frankfurt (DE); Fröhlich, Wilfried, 65520 Bad Camberg (DE); Klöker, Justus, Dr., 61267 Neu-Anspach (DE); Eck, Karl, 60318 Frankfurt (DE); Keller, Dieter, 63743 Aschaffenburg (DE); Meyer, Knut, Dr., 45239 Essen (DE); Mohr, Ingo, 56462 Höhn (DE); Moser, Rainer, Dr., 65510 Idstein (DE); Rumpf, Bernd, 61130 Nidderau-Windecken (DE); Sinz, Wolfgang, Dr., 65843 Sulzbach (DE)
(74) Vertreter: Klein, Thomas, Dipl.-Ing.

(57) **Zusammenfassung**

Ein Kraftstoffbehälter (1) für ein Kraftfahrzeug hat eine aus zwei übereinander angeordneten Schalen (7 - 10) zusammengesetzte Wandung (2). Die äußere Schale (7) der Wandung (2) hat eine Einlaßöffnung (14) und eine Auslaßöffnung (15). Vor der Auslaßöffnung (15) ist ein Filterelement (18) angeordnet. Hierdurch gelangt Spülluft zunächst in einen Spalt (11, 12) zwischen den Schalen (7 - 10) und anschließend zu einem Filterelement (18). Kraftstoffdämpfe können dadurch nicht mehr durch die Wandung (2) hindurchdiffundieren und die Umgebung belasten.

## Beschreibung

Die Erfindung betrifft einen Kraftstoffbehälter für ein Kraftfahrzeug mit einer aus Kunststoff insbesondere im Spritzgußverfahren gefertigten Wandung.

Solche Kraftstoffbehälter werden in heutigen Kraftfahrzeugen häufig eingesetzt und sind damit bekannt. Hierbei ist der Kraftstoffbehälter meist aus mehreren im Spritzgußverfahren gefertigten Teilen zusammengesetzt. Durch die Fertigung des Kraftstoffbehälters im Spritzgußverfahren lassen sich sehr einfach komplizierte Formen herstellen oder Einbauten einsetzen. Weiterhin gestaltet sich hierdurch der Kraftstoffbehälter sehr kostengünstig.

Nachteilig bei Kraftstoffbehältern aus Kunststoff ist, daß Kraftstoffdämpfe durch dessen Wandung diffundieren können. Dies führt zu einer unnötigen Belastung der Umwelt mit Kraftstoffdämpfen.

Der Erfindung liegt das Problem zugrunde, einen Kraftstoffbehälter der eingangs genannten Art so zu gestalten, daß er besonders kostengünstig herstellbar ist und daß möglichst wenig Kraftstoffdämpfe durch dessen Wandung in die Umwelt gelangen können.

Dieses Problem wird erfindungsgemäß dadurch gelöst, daß die Wandung zumindest zwei übereinander angeordnete Schalen aufweist und daß der Kraftstoffbehälter Mittel zum Entfernen von in einem Spalt zwischen den Schalen vorhandenen Kraftstoffdämpfen hat.

Durch diese Gestaltung hat der Kraftstoffbehälter eine Doppelwandung, durch die eine unmittelbare Diffusion der Kraftstoffdämpfe verhindert wird. Die Kraftstoffdämpfe, die die innere Schale passiert haben, sammeln sich zunächst in dem Spalt zwischen den Wandungen. Eine weitere Diffusion durch die zweite Wandung wird durch die Mittel zum Entfernen der Kraftstoffdämpfe verhindert. Hierdurch gelangen nahezu keine Kraftstoffdämpfe in die Umwelt.

Die Mittel zum Entfernen der Kraftstoffdämpfe gestalten sich gemäß einer vorteilhaften Weiterbildung der Erfindung besonders kostengünstig, wenn sie ein zwischen den beiden Schalen angeordnetes, Kraftstoffdämpfe aufnehmendes Filterelement aufweisen. Ein weiterer Vorteil dieser Gestaltung besteht darin, daß Geräusche aus dem Kraftstoffbehälter von dem Filterelement gedämpft werden.

Die Mittel zum Entfernen der Kraftstoffdämpfe verhindern gemäß einer anderen vorteilhaften Weiterbildung der Erfindung dauerhaft ein Entweichen von Kraftstoffdämpfen, wenn sie eine an der äußeren Schale angeordnete Einlaßöffnung und eine Auslaßöffnung für Spülluft haben. Die Spülluft kann hierbei wahlweise alleine oder zusammen mit dem zwischen den Schalen angeordneten Filterelement zur Entfernung der Kraftstoffdämpfe vorgesehen sein.

Ein unbeabsichtigtes Entweichen von mit Kraftstoffdämpfen belasteter Spülluft aus dem Spalt zwischen den Schalen läßt sich gemäß einer anderen vorteilhaften Weiterbildung der Erfindung vermeiden, wenn die Einlaßöffnung und die Auslaßöffnung jeweils von einem Ventil verschließbar sind.

Die Kraftstoffdämpfe lassen sich gemäß einer anderen vorteilhaften Weiterbildung der Erfindung mit der Spülluft beseitigen, wenn im Bereich der Auslaßöffnung ein Anschluß für eine zu einer Brennkraftmaschine des Kraftfahrzeuges führende Leitung angeordnet ist. Hierdurch wird die Spülluft der Brennkraftmaschine zugeführt. Die Kraftstoffdämpfe werden anschließend verbrannt.

Das zwischen den Schalen angeordnete Filterelement könnte beispielsweise nach einer vorgesehenen Zeitspanne ausgewechselt werden. Dies erfordert jedoch eine sehr kostenintensive Wartung des Kraftstoffbehälters. Ein regelmäßiges Auswechseln des Filterelementes läßt sich gemäß einer anderen vorteilhaften Weiterbildung der Erfindung vermeiden, wenn das Filterelement von den Schalen beabstandet ist. Hierdurch befindet sich zwischen dem Filterelement und den Schalen ein Spalt, durch den Spülluft strömen kann. Das Filterelement wird hierdurch von der Spülluft gereinigt. Durch diese Gestaltung ist eine ständige Durchströmung des Spaltes zwischen den Schalen mit Spülluft nicht erforderlich. Die Durchströmung kann beispielsweise in vorgesehenen Zeitintervallen erfolgen.

Der erfindungsgemäße Kraftstoffbehälter läßt sich besonders kostengünstig fertigen, wenn die Mittel zum Entfernen der Kraftstoffdämpfe ein an der Auslaßöffnung angeordnetes Filterelement aufweisen. Ein weiterer Vorteil dieser Gestaltung besteht darin, daß sich der Filter von den übrigen Bereichen des Kraftstoffbehälters einfach trennen läßt. Dies führt zu einer besonders einfachen Recycelbarkeit des erfindungsgemäßen Kraftstoffbehälters.

Die Kraftstoffdämpfe werden besonders zuverlässig entfernt, wenn das Filterelement Aktivkohle enthält.

Zur weiteren Verringerung der Fertigungskosten des erfindungsgemäßen Kraftstoffbehälters trägt es bei, wenn die Abstandhalter einteilig mit einer der Schalen gefertigt sind. Die Abstandhalter lassen sich sehr einfach einteilig mit einer der Schalen im Spritzgußverfahren fertigen. Anschließend können die Schalen sehr einfach zusammengesetzt werden.

Die Schalen lassen sich gemäß einer anderen vorteilhaften Weiterbildung der Erfindung in kostengünstigen, einfach aufgebauten Spritzgußformen fertigen, wenn die Abstandhalter als gitterartiges Einlegeteil gestaltet sind.

Zur weiteren Verringerung der Fertigungskosten des erfindungsgemäßen Kraftstoffbehälters trägt es bei, wenn das zwischen den Schalen angeordnete Filterelement mit den Abstandhaltern eine bauliche Einheit bildet.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine schematische Darstellung eines erfindungsgemäßen Kraftstoffbehälters im Längsschnitt,
- Fig.2: einen Teilbereich einer Wandung einer weiteren Ausführungsform des erfindungsgemäßen Kraftstoffbehälters.

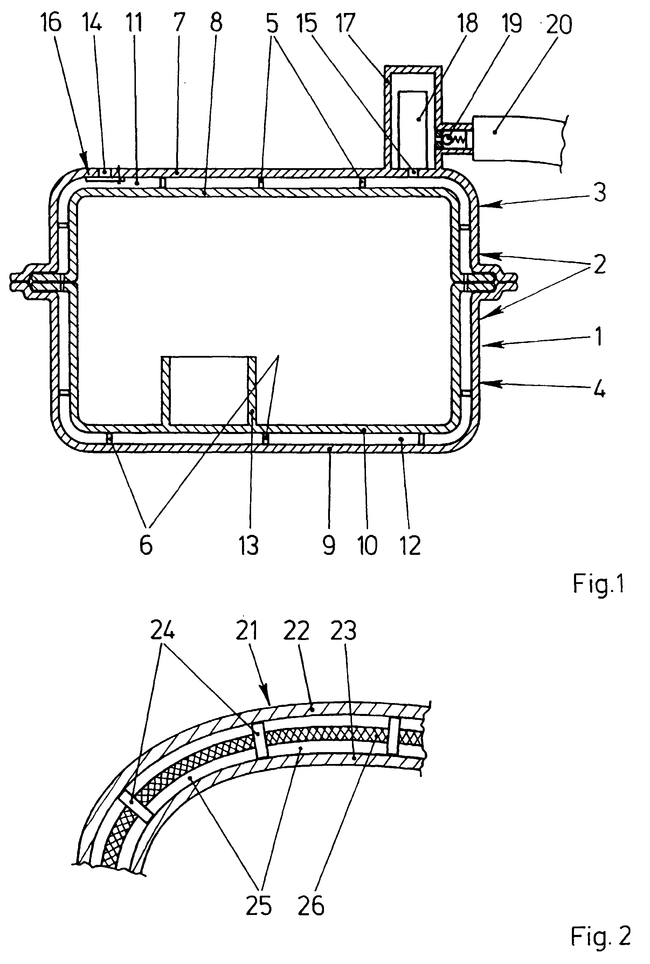

Die Figur 1 zeigt einen erfindungsgemäßen Kraftstoffbehälter 1 für ein Kraftfahrzeug mit einer aus Kunststoff im Spritzgußverfahren gefertigten Wandung 2. Der Kraftstoffbehälter 1 setzt sich aus einem oberen Teil 3 und einem unteren Teil 4 zusammen. Die Teile 3, 4 weisen jeweils zwei übereinander angeordnete, mittels Abstandhalter 5, 6 voneinander beabstandete Schalen 7 - 10 auf. Hierdurch befindet sich zwischen den Schalen 7 - 10 der beiden Teile 3, 4 jeweils ein Spalt 11, 12. Das untere Teil 4 ist einteilig mit einem Schwalltopf 13 gefertigt. Die äußere Schale 7 des oberen Teils 3 hat eine Einlaßöffnung 14 und eine Auslaßöffnung 15 für Spülluft. Die Einlaßöffnung 14 ist von einem Ventil 16 mit einer Membran verschließbar. Vor der Auslaßöffnung 15 ist ein Gehäuse 17 mit einem Filterelement 18 und einem Rückschlagventil 19 angeordnet. An dem Gehäuse 17 ist eine zu einer nicht dargestellten Brennkraftmaschine des Kraftfahrzeuges führende Leitung 20 angeschlossen. Spülluft, die durch die Einlaßöffnung 14 in den Spalt 11 zwischen den Schalen 7, 8 einströmt, gelangt über das Filterelement 18 zu der Brennkraftmaschine. Deshalb können keine Kraftstoffdämpfe durch die Wandung 2 diffundieren und in die Umwelt gelangen.

Der Spalt 12 zwischen den Schalen 9, 10 des unteren Teils 4 könnte beispielsweise mit dem Spalt 11 zwischen den schalen 7, 8 des oberen Teils 3 verbunden sein oder eine eigene, nicht dargestellte Verbindung mit der Brennkraftmaschine aufweisen. Die Abstandhalter 5, 6 sind wahlweise als Einlegeteile oder einteilig mit einer der Schalen 7 - 10 gefertigt. Das Filterelement 18 kann beispielsweise als Aktivkohlefilter gestaltet sein.

Die Figur 2 zeigt einen Teilbereich einer Wandung 21 einer weiteren Ausführungsform des erfindungsgemäßen Kraftstoffbehälters. Die Wandung 21 hat eine äußere Schale 22 und eine innere Schale 23, zwischen denen sich ein von Abstandhaltern 24 eingestellter Spalt 25 befindet. Die Abstandhalter 24 durchdringen ein mattenförmiges Filterelement 26. Das Filterelement 26 und die Abstandhalter 24 sind hierbei als Einlegeteil gestaltet. Das Filterelement 26 ist von den beiden Schalen 22, 23 beabstandet, so daß zur Reinigung Spülluft an dem Filterelement 26 entlangstreichen kann.

## Patentansprüche

1. Kraftstoffbehälter für ein Kraftfahrzeug mit einer aus Kunststoff insbesondere im Spritzgußverfahren gefertigten Wandung, **dadurch gekennzeichnet**, daß die Wandung (2, 21) zumindest zwei übereinander angeordnete Schalen (7 - 10, 22, 23) aufweist und daß der Kraftstoffbehälter (1) Mittel zum Entfernen von in einem Spalt (11, 12) zwischen den Schalen (7 - 10, 22, 23) vorhandenen Kraftstoffdämpfen hat.

2. Kraftstoffbehälter nach Anspruch 1, **dadurch gekennzeichnet**, daß die Mittel zum Entfernen der Kraftstoffdämpfe ein zwischen den beiden Schalen (22, 23) angeordnetes, Kraftstoffdämpfe aufnehmendes Filterelement (26) aufweisen.

3. Kraftstoffbehälter nach Anspruch 1 oder 2, **dadurch gekennzeichnet**, daß die Mittel zum Entfernen der Kraftstoffdämpfe eine an der äußeren Schale (7) angeordnete Einlaßöffnung (14) und eine Auslaßöffnung (15) für Spülluft haben.

4. Kraftstoffbehälter nach zumindest einem der vorhergehenden Ansprüche, **dadurch gekennzeichnet**, daß die Einlaßöffnung (14) und die Auslaßöffnung (15) jeweils von einem Ventil (16, 19) verschließbar sind.

5. Kraftstoffbehälter nach zumindest einem der vorhergehenden Ansprüche, **dadurch gekennzeichnet**, daß im Bereich der Auslaßöffnung (15) ein Anschluß für eine zu einer Brennkraftmaschine des Kraftfahrzeuges führende Leitung (20) angeordnet ist.

6. Kraftstoffbehälter nach zumindest einem der vorhergehenden Ansprüche, **dadurch gekennzeichnet**, daß das Filterelement (26) von den Schalen beabstandet ist.

7. Kraftstoffbehälter nach zumindest einem der vorhergehenden Ansprüche**, dadurch gekennzeichnet**, daß die Mittel zum Entfernen der Kraftstoffdämpfe ein an der Auslaßöffnung (15) angeordnetes Filterelement (18) aufweisen.

8. Kraftstoffbehälter nach zumindest einem der vorhergehenden Ansprüche, **dadurch gekennzeichnet**, daß das Filterelement (18, 26) Aktivkohle enthält.

9. Kraftstoffbehälter nach zumindest einem der vorhergehenden Ansprüche**, dadurch gekennzeichnet**, daß die Abstandhalter (5, 6) einteilig mit einer der Schalen (7 - 10) gefertigt sind.

10. Kraftstoffbehälter nach zumindest einem der vorhergehenden Ansprüche, **dadurch gekennzeichnet**, daß die Abstandhalter (24) als gitterartiges Einlegeteil gestaltet sind.

11. Kraftstoffbehälter nach zumindest einem der vorhergehenden Ansprüche, **dadurch gekennzeichnet**, daß das zwischen den Schalen (22, 23) angeordnete Filterelement (26) mit den Abstandhaltern (24) eine bauliche Einheit bildet.
